# EUROPÄISCHE PATENTSCHRIFT

(11) **EP 0 752 080 B1**
(45) Veröffentlichungstag und Bekanntmachung des Hinweises auf die Patenterteilung: **02.12.1998**
(21) Anmeldenummer: 95913093.1
(22) Anmeldetag: 13.03.1995
(51) Int. Cl.: F16L 27/08, A62C 35/68

(54) **ROHRANORDNUNG FÜR SPRINKLERANLAGEN**
PIPEWORK FOR SPRINKLER SYSTEMS
TUYAUTERIE POUR INSTALLATIONS A TETES D'EXTINCTION AUTOMATIQUES

(30) Priorität: 23.03.1994 DE 4409904
(43) Veröffentlichungstag der Anmeldung: 08.01.1997
(73) Patentinhaber: Vieregge, Uwe, 63584 Gründau (DE)
(72) Erfinder: Vieregge, Uwe, 63584 Gründau (DE)
(74) Vertreter: Stoffregen, Hans-Herbert, Dr. Dipl.-Phys. Patentanwalt
(86) Internationale Anmeldenummer: EP9500924
(87) Internationale Veröffentlichungsnummer: WO9525923

(56) Entgegenhaltungen:
- FR-A- 1 256 926
- FR-A- 2 038 071
- FR-A- 2 306 716
- FR-A- 2 348 426

## Beschreibung

Die Erfindung bezieht sich auf eine Rohranordnung für Sprinkleranlagen umfassend eine Löschflüssigkeit führende Versorgungsleitung, einen Sprinklerkopf, der von einem Endstück ausgeht, sowie zwischen dem Endstück und einem von der Versorgungsleitung ausgehenden Anschlußstück verlaufende Rohre, die um parallel zueinander und vorzugsweise vertikal verlaufende erste Achsen verschwenkbar sind, wobei von den verschwenkbaren Rohren zumindest eines ein (erstes) U-Rohr mit erstem und zweitem Seitenschenkel ist, von denen zumindest ein (erster) Seitenschenkel Aufnahme für zumindest ein weiteres (zweites) verschwenkbares Rohr ist, das mit dem U-Rohr über eine Steckverbindung druckdicht verbindbar ist.

Eine entsprechende Rohranordnung ist der WO 91/16949 zu entnehmen. Dabei können Winkelstücke und Zwischenrohre zu U-Rohren zusammengesetzt werden, die ihrerseits über S-förmige Zwischenstücke mit einem Sprinklerkopf verbunden sind. Vor der endgültigen Montage können die lose zusammengesetzten Rohre derart um vertikal verlaufende Achsen verschwenkt werden, daß der Sprinklerkopf zur Versorgungsleitung einen gewünschten Abstand einnimmt. Sodann werden die Rohre über Schraubelemente fest miteinander verbunden, um eine erforderliche Dichtigkeit zu erzielen.

Auch besteht die Möglichkeit, eine Höhenverstellung des Sprinklerkopfes vorzunehmen. Hierzu ist ein vertikal verlaufendes Rohr als Teleskoprohr ausgebildet.

Werden die Schrauben nach der Justage nicht im hinreichenden Umfang angezogen, so besteht die Gefahr, daß bei Druckbeaufschlagung der Rohranordnung die Rohre auseinandergleiten und Löschflüssigkeit unkontrolliert austritt.

Aus der FR-A-2 306 716 ist eine Rohranordnung für Sprinkleranordnungen bekannt, bei der Teleskoprohre mittels einer Überwurfmutter miteinander verbunden werden. Ein Lösen der Überwurfmutter bzw. Verstellen der Rohre bei Druckbeaufschlagung der Rohranordnung ist nicht möglich.

Sonstige, sich jedoch nicht auf Sprinkleranlagen beziehende Rohrverbindungen sind aus der FR-A-2 348 426, FR-A-2 038 071 oder der FR-A-1 256 926 zu entnehmen. Durch die vorbekannten Maßnahmen besteht jedoch nicht die Möglichkeit, entweder die Rohre bei Druckbeaufschlagung der gesamten Rohranordnung zu verstellen oder aber Eintritts- und Austrittspunkt der Rohranordnung sowohl in horizontaler als auch in vertikaler Richtung zu variieren.

Der vorliegenden Erfindung liegt das Problem zugrunde, eine Rohranordnung für Sprinkleranlagen der zuvor beschrieben Art so weiterzubilden, daß auch bei eingeschränkten Raumverhältnissen in Abhängigkeit von den verwendeten verschwenkbaren Rohren eine hohe Variabilität der Einstellmöglichkeiten für den Sprinklerkopf sogar bei bereits in Betrieb befindlicher Sprinkleranlage besteht. Ferner soll die Verbindung zwischen den einzelnen Rohren bei konstruktiv einfachem Aufbau üblichen Sicherheitsanforderungen genügen.

Das Problem wird erfindungsgemäß zum einen dadurch gelöst, daß die Steckverbindung eine einen Sprengring umfassende Rastverbindung ist und daß die über die Rastverbindung verbundenen Rohre auch bei durch Löschflüssigkeit hervorgerufenem Druck um die ersten Achsen zueinander verschwenkbar sind.

Durch die erfindungsgemäße Lehre ergibt sich der Vorteil, daß die Rohre auch unter Druck gegeneinander verschwenkbar sind, um den gewünschten Abstand zwischen dem Sprinklerkopf und der Versorgungsleitung einstellen zu können. Aufgrund der Verwendung einer Rastverbindung ergibt sich des weiteren der Vorteil, daß die Rohre nicht unkontrolliert auseinandergleiten können. Insbesondere ist jedoch der Vorteil gegeben, daß auch bei einer im Betrieb befindlichen Sprinkleranlage ein nachträgliches Justieren des Sprinklerkopfes erfolgen kann.

Nach einem eigenerfinderischen Vorschlag ist vorgesehen, daß die Rohranordnung zumindest zwei U-Rohre sowie ein zwischen diesen verlaufendes Winkelrohr umfaßt, und daß die über die als Sprengringe umfassende Rastverbindungen ausgebildeten Steckverbindungen verbundenen Rohre bei durch Löschflüssigkeit hervorgerufenem Druck verschwenkbar sind, wobei zumindest ein U-Rohr sowohl um erste Achsen als auch um zumindest eine senkrecht zu den ersten Achsen verlaufende zweite Achse verschwenkbar ist.

Durch diese Maßnahmen ist die Möglichkeit gegeben, den Sprinklerkopf auf engstem Raum sowohl horizontal als auch vertikal verstellen zu können, und zwar auch dann, wenn die Rohranordnung unter Druck der Löschflüssigkeit steht.

Insbesondere ist vorgesehen, daß der mit seiner Längsachse vertikal oder im wesentlichen vertikal ausgerichtete Sprinklerkopf zu der Versorgungsleitung durch Verschwenken der Rohre sowohl um die ersten vertikal verlaufenden Achsen als über die zweiten horizontal verlaufenden Achsen räumlich abstandsveränderbar ist.

Um eine absolut dichte und unlösbare Steckverbindung zur Verfügung zu stellen ist vorgesehen, daß in einer umlaufenden Innennut der Aufnahme der Sprengring angeordnet ist, der bei in die Aufnahme eingebrachtem Ende des weiteren Rohres bzw. des Anschlußstücks bereichsweise in eine umlaufende Außennut des weiteren Rohres bzw. Anschlußstückes einrastet. Durch den Sprengring wird eine drehbare Rastverbindung zwischen den Rohren hergestellt, die grundsätzlich unlösbar ist, da sich der Sprengring bereichsweise sowohl innerhalb der Außennut des weiteren Rohres bzw. des Anschlußstückes und der Innennut des U-Rohres erstreckt.

Um das weitere Rohr bzw. das Anschlußstück auf einfache Weise in die Aufnahme einbringen zu können, ohne daß eine Behinderung durch den Sprengring erfolgen kann, ist vorgesehen, daß das jeweilige freie Ende des weiteren Rohres bzw. Anschlußstückes angefast ist.

Um die erforderliche Abdichtung zwischen den Rohren zu gewährleisten, ist in der Aufnahme eine weitere eine Dichtung wie O-Ring aufnehmende Innennut vorgesehen, die jedoch in bezug auf die erste Innennut zur Öffnung der Aufnahme entfernter liegt.

Um ein Fixieren der gegeneinander verschwenkbaren Rohre zu ermöglichen, sobald der Sprinklerkopf in der gewünschten Position eingestellt ist, geht von der Außenwandung der Aufnahme ein Fixierelement in Form von vorzugsweise einer Madenschraube mit Ringschneide aus, die sich in der Außenwandung des weiteren Rohres bzw. Anschlußstückes eindrückt.

Das weitere Rohr kann ein eine Z-Form aufweisendes Z-Rohr oder ein eine L-Form aufweisendes Winkelrohr sein. Dabei stellen die Winkelrohre entweder Verbindungen zwischen U-Rohren oder zwischen einem U-Rohr und einem Endrohr her. Sofern das Winkelrohr ein zwischen U-Rohren verlaufendes Verbindungsrohr ist, sind dessen Enden in Aufnahmen von U-Rohren über Steckverbindungen zuvor beschriebener Art verbindbar.

Z-Rohre sind an ihrem einen Ende als Aufnahme ausgebildet, wohingegen das andere Ende in einer Aufnahme eines U-Rohres einsteckbar ist.

Um den Sprinklerkopf sowohl in der Höhe zur Versorgungsleitung als auch im seitlichen Abstand zu dieser einstellen zu können, ist vorgesehen, daß die Rohranordnung zumindest ein Anschlußstück, zwei U-Rohre und zwei Winkelrohre umfaßt.

Wird dagegen allein eine Abstandsveränderung des Sprinklerkopfes seitlich zur Versorgungsleitung gewünscht, ohne daß der Abstand zwischen der Ebene, innerhalb der der Sprinklerkopf verschwenkbar ist, zu der Vesorgungsleitung zu variieren ist, so umfaßt die Rohranordnung zumindest ein Anschlußstück, ein U-Rohr sowie ein Z-Rohr.

Weitere Vorteile der Erfindung ergeben sich nicht nur aus den Ansprüchen, den diesen zu entnehmenden Merkmalen - für sich und/oder in Kombination -, sondern auch aus den der Zeichnung zu entnehmenden bevorzugten Ausführungsbeispielen.

Es zeigen:
Fig. 1 eine erste Ausführungsform einer Rohranordnung für Sprinkleranlagen und
Fig. 2 eine zweite Ausführungsform einer Rohranordnung für Sprinkleranlagen.

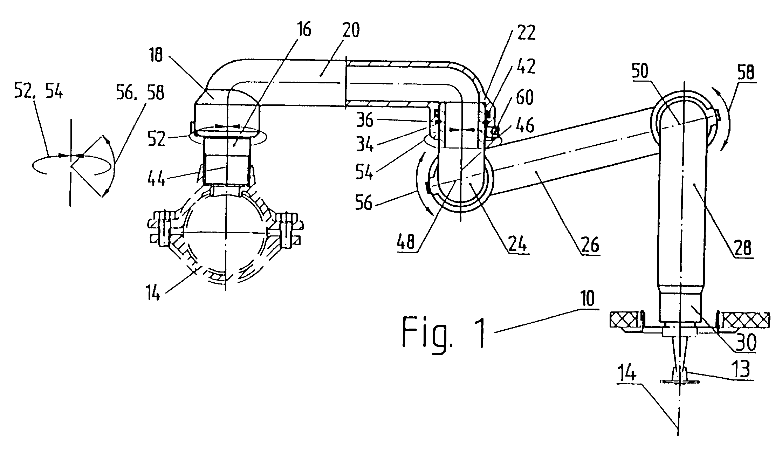

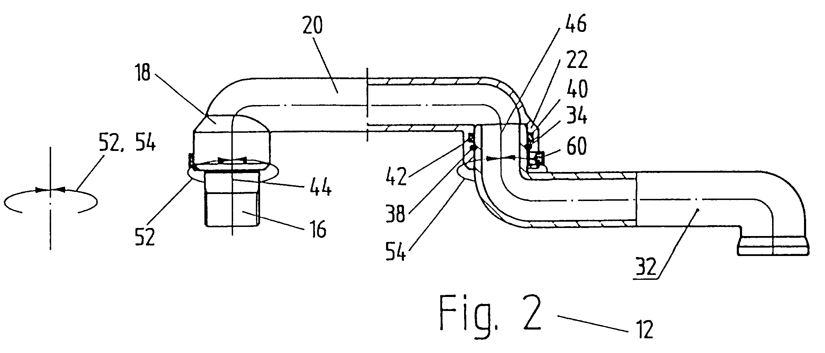

In den Figuren, in denen gleiche Elemente mit gleichen Bezugszeichen versehen sind, sind Rohranordnungen (10) und (12) dargestellt, die für Sprinkleranlagen bestimmt sind und mit denen der Abstand eines in Fig. 2 rein prinzipiell dargestellten Sprinklerkopfes (13) zu einer Löschflüssigkeit führenden Versorgungsleitung (14) entweder nur seitlich (Fig. 2) oder aber sowohl seitlich als auch in der Höhe (Fig. 1) einstellbar ist.

Im Ausführungsbeispiel der Fig. 1 umfaßt die Rohranordnung (10) ein von der Versorgungsleitung (14) ausgehendes Anschlußstück (16), das in einem Seitenschenkel (18) eines U-Rohres (20) in nachstehend beschriebener Art einrastbar ist. Der verbleibende Seitenschenkel (22) des U-Rohres (20) ist ebenfalls als Aufnahme ausgebildet, wobei im Ausführungsbeispiel ein eine L-Form bildendes Winkelrohr (24) eingesteckt ist.

Das Winkelrohr (24) ist mit einem weiteren U-Rohr (26) verbunden, das dem U-Rohr (20) entspricht, dessen nicht näher bezeichnete und parallel zueinander verlaufende Seitenschenkel folglich als Aufnahmen ausgebildet sind. Schließlich geht von dem zweiten U-Rohr ein weiteres Winkelrohr (28) aus, an dessen freiem Ende (30) in gewohnter Weise ein Sprinklerkopf (13) anbringbar ist, dessen Längsachse (15) grundsätzlich vertikal oder im wesentlichen vertikal verläuft.

Die Seitenschenkel (18) und (22) des U-Rohres (20) sind vorzugsweise als Aufnahmen für entweder das Anschlußstück (16) oder für Winkelrohre (24), (18) oder ein eine Z-Form aufweisendes Z-Rohr (32) gemäß Fig. 2 bestimmt.

Um eine druckdichte Steckverbindung zur Verfügung zu stellen, ist in den jeweiligen Seitenschenkel (18) bzw. (22) eine umlaufende Innennut (34) vorhanden, in der ein Sprengring (36) angeordnet ist.

Eine der Innennut (34) zugeordnete Außennut (38) weist das Anschlußstück (16) bzw. das Winkelrohr (24), (26) bzw. Z-Rohr (32) auf. Dabei sind Innen- und Außennut (34) bzw. (38) dann aufeinander ausgerichtet, wenn das Anschlußstück (16) bzw. die anzuschließenden Rohre (24), (28), (32) ordnungsgemäß in der Aufnahme (22) eingebracht sind. In dieser Position springt der Sprengring (36) teilweise in die Außennut (38), so daß eine unlösbare Verbindung zwischen dem U-Rohr (20) und dem Anschlußstück (16) bzw. Anschlußrohr (24), (28) bzw. (32) gegeben ist.

Um zusätzlich die erforderliche Druckdichtigkeit zu gewährleisten, weist die Aufnahme (22) eine weitere Innennut (40) auf, in der ein O-Ring (42) verläuft, der an eine Außenwandung des eingebrachten Anschlußstückes (16) bzw. Z- bzw. Winkelrohrs (32), (24), (28) anliegt. Dabei verläuft die den O-Ring (42) aufweisende Innennut (40) in bezug auf die den Sprengring (36) aufnehmende Innennut (34) zur Öffnung der Aufnahme (22) entfernt liegender.

Die einzelnen Rohre (20), (24), (26), (28) der Rohranordnung (10) sind nun um Achsen (44), (46), (48) und (50) drehbar, die mit den Längsachsen der Aufnahmen (22) und somit der Seitenschenkel (18), (22) der U-Rohre (20), (26) zusammenfallen. Dieses Drehen bzw. Verschwenken ist in den Fig. 1 und 2 durch die Pfeile (52), (54), (56) und (58) angedeutet.

Sobald der Sprinklerkopf (13) zu dem Versorgungsrohr (14) ausgerichtet ist, können die zuvor verstellbaren Rohre (20), (24), (26), (28) bzw. (20), (32) über Gewindestifte (60) zueinander fixiert werden. Hierzu geht ein Gewindestift (60) von der Außenwandung des jeweiligen Seitenschenkels (18), (22) des U-Rohrs (20) aus und ist in der Außenwandung des in die Aufnahme eingebrachten Endabschnitts des L-Rohres (24) bzw. (28) bzw. Z-Rohrs (32) bzw. des Anschlußstücks (16) eindrückbar. Dabei verläuft der Gewindestift (60) zwischen der den Sprengring (36) aufnehmenden umlaufenden Nut (34) und der Öffnung des Seitenschenkels (18) bzw. (22) des U-Rohres (20).

Ist nach Fig. 1 der Sprinklerkopf (13) der Rohranordnung (10) zu der Versorgungsleitung (14) räumlich abstandsveränderbar also sowohl in der Höhe als auch im seitlichen Abstand einstellbar, so ermöglicht die Rohranordnung (12) gemäß Fig. 2 nur eine Seitenverstellbarkeit zu der in der Fig. 2 nicht dargestellten Versorgungsleitung. Dies bedeutet, daß ein Verstellen des gegebenenfalls über ein Teleskoprohr mit dem Z-Rohr (32) verbundenen Sprenklerkopfes allein um die Achsen (44) und (46) herum erfolgt.

Bezüglich der Steckverbindungen und deren Aufbau der Rohranordnung (12) nach Fig. 2 sind die konstruktiven Lösungen vorgesehen, die anhand der Fig. 1 erläutert worden sind.

## Patentansprüche

1. Rohranordnung (12) für Sprinkleranlagen umfassend eine Löschflüssigkeit führende Versorgungsleitung (14), einen Sprinklerkopf (13), der von einem Endstück (28) ausgeht, sowie zwischen dem Endstück und einem von der Versorgungsleitung ausgehenden Anschlußstück verlaufende Rohre (20, 24, 26, 28, 32), die um parallel zueinander und um vorzugsweise vertikal verlaufende erste Achsen (44, 46) verschwenkbar sind, wobei von den verschwenkbaren Rohren zumindest eines ein (erstes) U-Rohr (20, 26) mit erstem und zweitem Seitenschenkel ist, von denen zumindest ein (erster) Seitenschenkel (18, 22) Aufnahme für zumindest ein weiteres (zweites) verschwenkbares Rohr ist, das mit dem U-Rohr über eine Steckverbindung (34, 36, 38, 40, 42) druckdicht verbindbar ist,
**dadurch gekennzeichnet,**
daß die Steckverbindung eine einen Sprengring umfassende Rastverbindung (34, 36, 38) ist und daß die Rohre (20, 24, 26, 28, 32) auch bei durch Löschflüssigkeit hervorgerufenem Druck um die ersten Achsen zueinander verschwenkbar sind.

2. Rohranordnung (10) für Sprinkleranlagen umfassend eine Löschflüssigkeit führende Versorgungsleitung (14), einen Sprinklerkopf (13), der von einem Endstück (28) ausgeht, sowie zwischen dem Endstück und einem von der Versorgungsleitung ausgehenden Anschlußstück verlaufende Rohre (20, 24, 26, 28, 32), die um parallel zueinander und um vorzugsweise vertikal verlaufende erste Achsen (44, 46) verschwenkbar sind, wobei von den verschwenkbaren Rohren zumindest eines ein (erstes) U-Rohr (20, 26) mit erstem und zweitem Seitenschenkel ist, von denen zumindest ein (erster) Seitenschenkel (18, 22) Aufnahme für zumindest ein weiteres (zweites) verschwenkbares Rohr ist, das mit dem U-Rohr über eine Steckverbindung (34, 36, 38, 40, 42) druckdicht verbindbar ist,
**dadurch gekennzeichnet,**
daß die Rohranordnung (10) zumindest zwei U-Rohre (20, 26) sowie ein zwischen diesen verlaufendes Winkelrohr (24) umfaßt, und daß die über die als einen Sprengringe umfassende Rastverbindungen (34, 36, 38) ausgebildeten Steckverbindungen verbundenen Rohre bei durch Löschflüssigkeit hervorgerufenem Druck zueinander verschwenkbar sind, wobei zumindest ein U-Rohr (26) sowohl um erste Achsen (44, 46) als auch um eine senkrecht zu den ersten Achsen verlaufende zweite Achse (48, 50) verschwenkbar ist.

3. Rohranordnung nach Anspruch 1 oder 3,
**dadurch gekennzeichnet,**
daß der erste und der zweite Seitenschenkel des U-Rohrs jeweils als Aufnahme für ein Winkelrohr, ein Z-Rohr, ein Endstück und/oder ein Anschlußstück ausgebildet sind.

4. Rohranordnung nach zumindest einem der vorhergehenden Ansprüche,
**dadurch gekennzeichnet,**
daß in einer umlaufenden Innennut (34) des die Aufnahme bildenden Seitenschenkels (18, 22) des U-Rohrs (20, 26) der Sprengring (36) angeordnet ist, der bei in die Aufnahme eingebrachtem Ende des weiteren Rohres (24, 28, 32) bzw. des Anschlußstückes (44) bereichsweise in eine umlaufende Außennut (38) des weiteren Rohres bzw. des Anschlußstückes einrastet.

5. Rohranordnung nach zumindest einem der vorhergehenden Ansprüche,
**dadurch gekennzeichnet,**
daß in dem Seitenschenkel (18, 22) des U-Rohres (20) eine weitere umlaufende Innennut (40) verläuft, in der ein Dichtelement (42) wie O-Ring angeordnet ist, welches bei in der Aufnahme arretiertem Ende des weiteren Rohres (24, 28, 32) bzw. des Anschlußstückes (16) an dessen Außenwandung dichtend anliegt.

6. Rohranordnung nach zumindest einem der vorhergehenden Ansprüche,
**dadurch gekennzeichnet**,
daß das in die Aufnahme einbringbare freie Ende des weiteren Rohres (24, 28, 32) bzw. Anschlußstückes (16) angefast ist.

7. Rohranordnung nach zumindest einem der vorhergehenden Ansprüche,
**dadurch gekennzeichnet**,
daß außenseitig von der Aufnahme ein das in diese eingesteckte weitere Rohr (24, 28, 32) bzw. Anschlußstück (16) festlegendes Fixierelement (60) wie Gewindestift ausgeht, das den Seitenschenkel (18, 22) zwischen dessen den Sprengring (36) aufnehmender ersten Innennut (34) und der Öffnung des Seitenschenkels durchsetzt.

8. Rohranordnung nach zumindest einem der vorhergehenden Ansprüche,
**dadurch gekennzeichnet**,
daß das mit dem U-Rohr (20, 24) druckdicht verbindbare weitere Rohr (24, 28, 32) ein eine L-Form aufweisendes Winkelrohr oder ein Z-Rohr ist.

9. Rohranordnung nach Anspruch 8,
**dadurch gekennzeichnet**,
daß das Winkelrohr (24) mit seinem jeweiligen freien Ende in einer Aufnahme eines U-Rohres einrastbar ist.

10. Rohranordnung nach Anspruch 8,
**dadurch gekennzeichnet**,
daß das Winkelrohr (10) mit einem seiner Enden in einer Aufnahme eines U-Rohres (26) einrastbar ist und an seinem anderen freien Ende (30) einen Sprinklerkopf (31) aufweist.

11. Rohranordnung nach zumindest einem der vorhergehenden Ansprüche,
**dadurch gekennzeichnet**,
daß das Z-Rohr (32) mit einem seiner freien Enden in ein U-Rohr (20) einsteckbar ist und sein anderes freies Ende als Aufnahme für ein weiteres Rohr ausgebildet ist.

12. Rohranordnung nach zumindest einem der vorhergehenden Ansprüche,
**dadurch gekennzeichnet**,
daß das mit dem Sprinklerkopf (31) verbundene Endrohr ein Teleskoprohr ist.

13. Rohranordnung nach zumindest einem der vorhergehenden Ansprüche,
**dadurch gekennzeichnet**,
daß die Rohranordnung (10) zumindest ein Anschlußstück (16), zwei U-Rohre (20, 26), zwei Winkelrohre (24, 28) sowie einen Sprinklerkopf umfaßt.

14. Rohranordnung nach zumindest einem der vorhergehenden Ansprüche,
**dadurch gekennzeichnet**,
daß die Rohranordnung (10) zumindest ein Anschlußstück (16), ein U-Rohr (20), ein Z-Rohr (32), ein vorzugsweise als Teleskoprohr ausgebildetes Endrohr sowie einen Sprinklerkopf umfaßt.

15. Rohranordnung nach zumindest einem der vorhergehenden Ansprüche,
**dadurch gekennzeichnet,**
daß der mit seiner Längsachse (15) vertikal oder im wesentlichen vertikal ausgerichtete Sprinklerkopf (13) zu der Versorgungsleitung (14) durch Verschwenken der Rohre (20, 24, 26, 28, 32) sowohl um die ersten vertikal verlaufenden Achsen (44, 46) als über die zweiten horizontal verlaufenden Achsen (48, 50) räumlich abstandsveränderbar ist.

## Claims

1. Pipework (12) for sprinkler systems comprising a supply line (14) conveying an extinguishing fluid, a sprinkler head (13) extending from an end piece (28), and pipes (20, 24, 26, 28, 32) running between said end piece and a connecting piece extending from said supply line, said pipes being swivelable about first axes (44, 46) parallel to one another and preferably vertical, where of the said swivelable pipes at least one is a (first) U-shaped pipe (20, 26) with first and second side arms, of which at least one (first) side arm (18, 22) is a receiver for at least one further (second) swivelable pipe that is connectable in pressure-tight manner to said U-shaped pipe by a plug-in connection (34, 36, 38, 40, 42),
**wherein**
said plug-in connection is a snap-type connection (24, 36, 38) comprising a snap ring and wherein said pipes (20, 24, 26, 28, 32) are swivelable in relation to one another about said first axes even when under pressure caused by extinguishing fluid.

2. Pipework (10) for sprinkler systems comprising a supply line (14) conveying an extinguishing fluid, a sprinkler head (13) extending from an end piece (28), and pipes (20, 24, 26, 28, 32) running between said end piece and a connecting piece extending from said supply line, said pipes being swivelable about first axes (44, 46) parallel to one another and preferably vertical, where of the said swivelable pipes at least one is a (first) U-shaped pipe (20, 26) with first and second side arms, of which at least one (first) side arm (18, 22) is a receiver for at least one further (second) swivelable pipe that is connectable in pressure-tight manner to said U-shaped pipe by a plug-in connection (34, 36, 38, 40, 42),
**wherein**
said pipework (10) comprises at least two U-shaped pipes (20, 26) and an L-shaped pipe (24) running between them, and wherein said pipes connected by said plug-in connections designed as snap-type connections comprising a snap ring are swivelable in relation to one another when under pressure caused by extinguishing fluid, with at least one U-shaped pipe (26) being swivelable both about first axes (44, 46) and about a second axis (48, 50) running vertical to said first axes.

3. Pipework according to Claim 1 or Claim 2,
**wherein**
said first and said second side arm of said U-shaped pipe are each designed as a receiver for an L-shaped pipe, a Z-shaped pipe, an end piece and/or a connecting piece.

4. Pipework according to at least one of the preceding claims,
**wherein**
in an all-round inner groove (34) of the side arm (18, 22) of said U-shaped pipe (20, 26) forming the receiver, the snap ring (36) is arranged that engages regionally in an all-round outer groove (38) of the further pipe or connecting piece when the end of said further pipe (24, 28, 32) or connecting piece (44) is seated in said receiver.

5. Pipework according to at least one of the preceding claims,
**wherein**
inside said side arm (18, 22) of said U-shaped pipe (20) is a further all-round inner groove (40) in which is arranged a sealing element (42) such as an O-ring that is in sealing contact with the outer wall of said further pipe (24, 28, 32) or of said connecting piece (16) when the end thereof is locked in said receiver.

6. Pipework according to at least one of the preceding claims,
**wherein**
the free end of said further pipe (24, 28, 32) or said connecting piece (16) insertable into said receiver is chamfered.

7. Pipework according to at least one of the preceding claims,
**wherein**
a fixing element (60) such as a headless pin fixing the further pipe (24, 28, 32) or connecting piece (16) seated in said receiver extends from the outside of said receiver and passes through the side arm (18, 22) between its first inner groove (34) receiving said snap ring (36) and the opening of said side arm.

8. Pipework according to at least one of the preceding claims,
**wherein**
said further pipe (24, 28, 32) connectable in pressure-tight manner to said U-shaped pipe (20, 24) is an angled pipe having an L shape or a Z-shaped pipe.

9. Pipework according to Claim 8,
**wherein**
said L-shaped pipe (24) snaps with its free end into a receiver of a U-shaped pipe.

10. Pipework according to Claim 8,
**wherein**
said L-shaped pipe (10) snaps with one of its ends into a receiver of a U-shaped pipe (26) and has at its other free end (30) a sprinkler head (13).

11. Pipework according to at least one of the preceding claims,
**wherein**
said Z-shaped pipe (32) is insertable with one of its free ends into a U-shaped pipe (20), and its other free end is designed as a receiver for a further pipe.

12. Pipework according to at least one of the preceding claims,
**wherein**
the end pipe connected to the sprinkler head (13) is a telescopic pipe.

13. Pipework according to at least one of the preceding claims,
**wherein**
said pipework (10) comprises at least one connecting piece (16), two U-shaped pipes (20, 26), two L-shaped pipes (24, 28) and a sprinkler head.

14. Pipework according to at least one of the preceding claims,
**wherein**
said pipework (10) comprises at least one connecting piece (16), one U-shaped pipe (20), one Z-shaped pipe (32), an end pipe preferably designed as a telescopic pipe and a sprinkler head.

15. Pipework according to at least one of the preceding claims,
**wherein**
said sprinkler head (13) aligned vertically or substantially vertically with its longitudinal axis (15) can be altered in its distance from said supply line (14) by swiveling said pipes (20, 24, 26, 28, 32) both about said first vertical axes (44, 46) and about said second horizontal axes (48, 50).

## Revendications

1. Agencement de tubes (12) pour installations d'extinction d'incendie, comportant une conduite d'alimentation (14) amenant un liquide d'extinction, une tête de projection (13) qui part d'une pièce d'extrémité (28), ainsi que des tubes (20, 24, 26, 28, 32) s'étendant entre la pièce d'extrémité et une pièce de raccordement partant de la conduite d'alimentation, et qui peuvent pivoter autour de premiers axes (44, 46) parallèles l'un à l'autre et s'étendant de préférence à la verticale, et parmi les tubes pivotants, au moins un (premier) tube est un tube en U (20, 26) comportant une première et une deuxième branche latérale dont au moins une (première) branche latérale (18, 22) constitue un logement pour au moins un autre (deuxième) tube pivotant qui peut être relié de manière étanche sous pression au tube en U par un premier raccord enfichable (34 , 36, 38, 40, 42), caractérisé en ce que le raccord enfichable est un raccord à accrochage élastique (34, 36, 38) comportant une bague de ressort, et en ce que les tubes (20, 24, 26, 28, 32) peuvent pivoter l'un vers l'autre autour des premiers axes également sous la poussée provoquée par le liquide d'extinction.

2. Agencement de tubes (10) pour installations d'extinction d'incendie, comportant une conduite d'alimentation (14) amenant un liquide d'extinction, une tête de projection (13) qui part d'une pièce d'extrémité (28), ainsi que des tubes (20, 24, 26, 28, 32) s'étendant entre la pièce d'extrémité et une pièce de raccordement partant de la conduite d'alimentation, et qui peuvent pivoter autour de premiers axes (44, 46) parallèles l'un à l'autre et s'étendant de préférence à la verticale, et parmi les tubes pivotants, au moins un (premier) tube est un tube en U (20, 26) comportant une première et une deuxième branche latérale dont au moins une (première) branche latérale (18, 22) constitue un logement pour au moins un autre (deuxième) tube pivotant qui peut être relié de manière étanche sous pression au tube en U par un premier raccord enfichable (34, 36, 38, 40, 42), caractérisé en ce que l'agencement de tubes (10) comporte au moins deux tubes en U (20, 26) ainsi qu'un tube coudé (24) s'étendant entre ces derniers, et en ce que les tubes reliés par les raccords enfichables configurés comme raccords à accrochage élastique (34, 36, 38) comportant des bagues de ressort peuvent pivoter l'un par rapport à l'autre sous la poussée provoquée par le liquide d'extinction, et au moins un tube en U (26) peut pivoter tant autour des premiers axes (44, 46) qu'autour d'un deuxième axe (48, 50) s'étendant perpendiculairement par rapport aux premiers axes.

3. Agencement de tubes selon les revendications 1 ou 2, caractérisé en ce que la première et la deuxième branche latérale du tube en U sont chacune configurées comme logement pour un tube coudé, un tube en Z, une pièce d'extrémité et/ou une pièce de raccordement.

4. Agencement de tubes selon au moins l'une des revendications précédentes, caractérisé en ce que la bague de ressort (36) est disposée dans une rainure intérieure périphérique (34) de la branche latérale (18, 22) du tube en U (20, 26) formant le logement, laquelle bague de ressort s'engage élastiquement dans des parties d'une rainure périphérique extérieure (38) de l'autre tube ou de la pièce de raccordement lorsque l'extrémité de l'autre tube (24, 28, 32) ou de la pièce de raccordement (44) est placée dans le logement.

5. Agencement de tubes selon au moins l'une des revendications précédentes, caractérisé en ce qu'une autre rainure intérieure périphérique (40) s'étend dans la branche latérale (18, 22) du tube en U (20), un élément d'étanchéité (42) tel qu'un joint torique étant disposé dans cette rainure intérieure et reposant de manière étanche contre la paroi extérieure lorsque l'extrémité de l'autre tube (24, 28, 32) ou de la pièce de raccordement (16) est bloquée dans le logement.

6. Agencement de tubes selon au moins l'une des revendications précédentes, caractérisé en ce que l'extrémité libre, qui peut être insérée dans le logement, de l'autre tube (24, 28, 32) ou de la pièce de raccordement (16) est chanfreinée.

7. Agencement de tubes selon au moins l'une des revendications précédentes, caractérisé en ce que du côté extérieur, un élément de fixation (60) tel qu'une tige filetée, immobilisant l'autre tube (24, 28, 32) ou la pièce de raccordement (16) enfichée, part du logement et traverse la branche latérale (18, 22) entre sa première rainure intérieure (34) recevant la bague de ressort (36) et l'ouverture de la branche latérale.

8. Agencement de tubes selon au moins l'une des revendications précédentes, caractérisé en ce que l'autre tube (24, 28, 32) qui peut être relié de manière étanche sous pression au tube en U (20, 24) est un tube coudé présentant la forme d'un L, ou un tube en Z.

9. Agencement de tubes selon la revendication 8, caractérisé en ce que le tube coudé (24) peut s'accrocher élastiquement dans un logement d'un tube en U par chacune de ses extrémités libres.

10. Agencement de tubes selon la revendication 8, caractérisé en ce que le tube coudé (10) peut s'accrocher élastiquement dans un logement d'un tube en U (26) par une de ses extrémités et présente à son autre extrémité libre (30) une tête de projection (31).

11. Agencement de tubes selon au moins l'une des revendications précédentes, caractérisé en ce que le tube en Z (32) peut s'enficher par son extrémité libre dans un tube en U (20), et son autre extrémité libre est configurée comme logement pour un autre tube.

12. Agencement de tubes selon au moins l'une des revendications précédentes, caractérisé en ce que le tube d'extrémité relié à la tête de projection (31) est un tube télescopique.

13. Agencement de tubes selon au moins l'une des revendications précédentes, caractérisé en ce que l'agencement de tubes (10) comporte au moins une pièce de raccordement (16), deux tubes en U (20, 26), deux tubes coudés (24, 28) et une tête de projection.

14. Agencement de tubes selon au moins l'une des revendications précédentes, caractérisé en ce que l'agencement de tubes (10) comporte au moins une pièce de raccordement (16), un tube en U (20), un tube en Z (32), un tube d'extrémité configuré de préférence comme tube télescopique ainsi qu'une tête de projection.

15. Agencement de tubes selon au moins l'une des revendications précédentes, caractérisé en ce que la tête de projection (13) dont l'axe longitudinal (15) est orienté à la verticale ou essentiellement à la verticale peut être disposée à distance variable de la conduite d'alimentation (14) par pivotement des tubes (20, 24, 26, 28, 32) aussi bien autour des premiers axes (44, 46) s'étendant à la verticale que par l'intermédiaire des deuxièmes axes (48, 50) s'étendant à l'horizontale.
